Europäisches Patentamt

**European Patent Office**

**Office européen des brevets**

(11) Publication number: **0 125 107**
**A1**

(12) # EUROPEAN PATENT APPLICATION

(21) Application number: **84302973.7**

(22) Date of filing: **03.05.84**

(51) Int. Cl.³: **B 32 B 27/08**
**B 65 D 75/26**

(30) Priority: **04.05.83 US 491350**

(43) Date of publication of application:
**14.11.84 Bulletin 84/46**

(84) Designated Contracting States:
**AT BE CH DE FR GB IT LI LU NL SE**

(71) Applicant: **AMERICAN CAN COMPANY**
**American Lane P.O. Box 3610**
**Greenwich, Connecticut 06836-3610(US)**

(72) Inventor: **Super, Scott S.**
**805 Sherry Street**
**Neenah Wisconsin 54956(US)**

(72) Inventor: **Jesse, Jerry F.**
**237 Alcott Drive**
**Neenah Wisconsin 54956(US)**

(72) Inventor: **Ching-Hsiang Hsu, Joseph**
**1116 Oxford Court**
**Neenah Wisconsin 54956(US)**

(74) Representative: **Harvey, David Gareth et al,**
**Graham Watt & Co. Riverhead**
**Sevenoaks Kent TN13 2BN(GB)**

(54) **A plural-layer packaging film, a method of making said film and a bag made therefrom.**

(57) A multiple layer packaging film (110) is based on a three-layer coextrusion featuring polyethylene terephthalate, the three layers of the coextrusion being simultaneously oriented and heat set. The three layer film may be used as it is, or may be combined with other layers e.g. a metallized barrier layer and a protective barrier layer. The latter may be reverse printed before laminating to the metallized surface of the polyethylene terephthalate.

In the film (110) the coextruded layers are a heat seal layer (112), an adhesive layer (114), and the polyethylene terephthalate layer (116). After application of the metallizing layer (118), the polyethylene terephthalate layer (116) is laminated to abuse-resistant layer (124) by way of an adhesive layer (120).

Such a film (110) is useful in the production of bags or pouches for foodstuff packaging, for instance.

FIG.2

"A PLURAL-LAYER PACKAGING FILM, A METHOD OF MAKING
SAID FILM AND A BAG MADE THEREFROM"

The present invention relates to a plural-layer packaging film, a method of making said film and a bag made therefrom.

In the packaging of certain products, and in particular food products, it is highly desirable to impede, and where economically practical, to prevent the transmission of certain gaseous materials into or out of the package. While not all gaseous permeations are halmful, the quality of products often deteriorates and their in use life may be degraded when exposed to certain ones of the various gases normally present in the air.

Regarding food products in particular as representative of the problems addressed herein, certain food products are harmed, either aesthetically or chemically, by transmissions of oxygen and water vapor especially. A typical problem is encountered in the packaging of snacks. Many dry foods such as snacks are advertised and marketed as having certain properties of crispness and freshness. For consumer satisfaction, it is important that these properties be retained through the intended use or storage life. Crispness is usually controlled by control of the moisture level. Freshness is usually associated with both crispness and flavor. A change in the flavor is attributed to oxygenation-type reactions with the product. Specifically, oxidation of cooking oils, such as in snack chips, produces a change resulting in a flavor usually described as rancid. Thus, in this product area, it is significant to control oxygen and water vapor transmission into the package.

Since most packages of the type contemplated herein are formed by activating heat seals, film commonly used for such packages have a heat sealable layer on one surface of the film and a more heat resistant layer on the other surface of the film. The two surface layers may be joined directly, or they may have intervening layers which provide interlayer adhesion, barrier properties and so on.

It is known to use biaxially oriented polypropylene or biaxially oriented polyesters as the heat resistant layer. The composition of the heat seal layers may be selected from among the commonly known materials, mainly polyethylenes, ethylene copolymers and derivatives thereof. Uses of Saran and certain grades of oriented polypropylene as the sealant layer are also known. Saran is commonly incorporated into packaging structures as an oxygen barrier layer and may also serve as the heat seal layer in some cases. The polyolefins, and particularly polyethylene provide a degree of protection against infusion of moisture vapor.

Recent improvements in barrier properties have resulted from the use of a layer of metal in the film structure. One known implementation of metal is the metallized layer, wherein a thin layer of metal is vapor deposited onto a polymeric film substrate. While the metallized layer is very thin, it can serve as an effective barrier to transmission of all gases when applied to an appropriate substrate. Metallization also provides an aesthetically pleasing appearance. In presently used metallized structures, the metallization is deposited onto a substrate of either biaxially oriented polyethylene terephthalate (PET) or biaxially oriented polypropylene (OPP). In one known metallized PET structure the opposite surface of the PET is coated with Saran to provide a heat seal layer. In another known structure, a film of PET and PETG (glycol modified polyethylene terephthalate) is metallized on the surface of the oriented PET layer. In that structure the PETG serves as the sealant layer. In both of the above structures, the metallized

- 4 -

surface (and sometimes intervening layers) is then laminated to an abuse resistant layer such as OPP or oriented PET.

While the described structures provide good protection, they both have inherently costly features. In the first structure, an additional processing step is required to apply the Saran heat seal layer. For the second structure, the temperature of heat sealing PETG is higher than desired, giving a narrow heat seal range and making the packages formed therefrom susceptible to distortion when heat sealed. Moreover, they demand excessive energy usage by the packager.

In the above structures, the salient desirable features are provided by the metallization and the oriented PET. The metallization provides good barrier properties against gaseous permeation. Typical oxygen permeation rate is no more than 0.06 $cm.^3/100in.^2$ 24 hrs., at $73^{O}F$. (0.01 $cm.^3/100$ $cm.^2$ 24 hrs. at $23^{O}C$), 0% R.H. Typical water vapor transmission rate is no more than 0.05 $cm.^3/100$ $in.^2$ 24 hrs., at $100^{O}F$. (0.008 $cm.^3/100$ $cm^2$ 24 hrs. at $38^{O}C$), 90% R.H. The oriented PET provides an excellent, smooth and uniform surface for deposition of the metallizing layer, providing for a uniform coverage and bonding of the metal, and thus uniform barrier protection. The oriented PET also imparts a crisp, crinkly feel to the film such as has been found aesthetically pleasing to consumers. These advantages are achieved, however, at an increased cost, either in making the film or in using it, as iterated above. It would be desirable to achieve the same functional film performance while reducing the cost. To wit, the metallized oriented PET should somehow be incorporated into a film which has improved economics.

Various attempts have been made to utilize advantageously the benefits of molecular orientation of films to achieve certain of the desirable properties. Attempts at orienting more than one layer simultaneously have met with limited success. A serious problem in these developments has been that each different polymer demands its own unique set of heating and stretching conditions. Where certain combinations of layer compositions do not have over-lapping conditions conducive to molecular orientation of the multiple layer film, additional provisions must be made for effecting the simultaneous orientation of the plurality of layers. In the absence of these provisions, previous attempts to orient multiple layer films have resulted in adjacent layers developing undesirable stresses at layer interfaces, and undesirable cohesive stresses within the layers themselves. These stresses too often have manifested themselves in poor interlayer adhesion at layer interfaces, and in cracking or hole development in one or more of the layers.

US-A 4,188,443 handles this problem in a 5 layer film by selecting the compositions of the second and fourth layers such that they are above their melt temperatures during the orientation process. While this mechanism is successful in relieving the interfacial stresses of the orientation process, only 3 of the 5 layers may be truly molecularly oriented. Selection of material compositions for layers 2 and 4 may be severely limited by the melting temperature requirements. No means is shown for molecular orientation of adjacent layers.

US-A 4,261,473 teaches a balanced 3 layer film, for instance in EXAMPLE 10, wherein the outer layers are polyethylene terephthalate and the core layer is EVOH. Sheets of this film are preheated for a lengthy period, i.e. 5 minutes, apparently to reach a steady state temperature throughout the film thickness, before the film is stretched by drawing it into a "cup" shaped mold. Indeed, this process is more closely related to conventional thermoforming than to molecular orientation.

US-A 4,194,039 teaches a "balanced" 3 layer film that is a combination of olefins and olefin blends. The film is made by a plurality of extrusion steps and orientation steps.

US-A 4,064,296 teaches an oriented 3 layer film having EVOH as the core layer. It is "crucial" (see col. 4 line 65 of the patent) that one of the two outer layers be cross-linked i.e. by irradiation.

In copending unpublished U.S. patent application serial number 446,009, filed December 1, 1982, assigned to ourselves, there are disclosed four and five layer unbalanced oriented films and method of orientation. The films disclosed therein all have polypropylene as one surface layer.

An object of this invention is to provide an economical packaging film having adjacent layers which have been simultaneously uniaxially oriented, and wherein one of the simultaneously uniaxially oriented layers is polyethylene terephthalate (PET). Desirably such a film is provided with a sealant layer having a low-to-moderate heat sealing temperature. It is also desirable to metallize the uniaxially oriented PET layer surface and to laminate an abuse resistant oriented polypropylene layer to the metallized PET layer. Such a film as embodies this invention is economical to make, and involves a minimum of processing steps. It provides excellent barrier to gaseous transmission, and the metallization provides an aesthetically pleasing appearance. The oriented polypropylene layer may be conventionally reverse printed with desired graphics.

According to one aspect, the present invention provides a uniaxially oriented three layer film, comprising, in order, a first heat sealable layer, a second layer of a modified polyolefin or olefin copolymer, and a third layer of polyethylene terephthalate. The film is advantageously produced by simultaneously coextruding the first, second and third layers and usbsequently simultaneously orienting all three layers. Thereafter, heat setting, also known as annealing, is performed on the oriented film. The composition of the heat sealable layer is preferably chosen from low density polyethylene, ethylene methyl acrylate, ethylene vinyl acetate and ionomer, the latter being the most preferred. The preferred composition for the adhesive layer is a modified ethylene copolymer.

In another, and preferred, embodiment of the invention, the third layer is metallized and an abuse resistant layer, such as oriented polypropylene, oriented polyester, or oriented nylon is included in the structure. According to this aspect of the invention, there is provided a multiple layer film comprising, in order, a first uniaxially oriented heat sealable layer, a second uniaxially oriented layer of a modified polyolefin or olefin copolymer adhesive, a third uniaxially oriented layer of polyethylene terephthalate, a fourth metallizing layer on said polyethylene terephthalate layer, a fifth polyethylene adhesive layer, and a sixth abuse resistant layer. Advantageously, the abuse resistant layer may be reverse printed before lamination of the abuse resistant layer to the rest of the structure, so that the printing is protected from enviornmental abuse by the abuse resistant layer.

Also according to the present invention there is provided a multiple layer film comprising, in order, a first uniaxially oriented heat sealable layer, a second uniaxially oriented layer of a modified polyolefin or olefin copolymer, a third uniaxially oriented layer of polyethylene terephthalate, a fourth polyethylene adhesive layer, a fifth layer of oriented polyester, and a sixth metallizing layer, the latter being disposed on a selected surface of a selected one of said third and fifth layers, the selected surface of the selected layer being that which is adjacent said fourth adhesive layer.

In one, although less preferred embodiment of the invention, the abuse resistant layer is oriented polyester, and the metallizing is placed on the abuse resistant layer rather than on the third layer of uniaxially oriented polyethylene terephthalate, and is buried in the final film structure. In this embodiment any printed indicia or other graphics can be surface printed on the abuse resistant layer.

The invention also provides a method of making a plural layer film comprising the steps of:

(a) coextruding a three layer film having a first heat sealable layer, a second polyethylene terephthalate layer and a third adhesive layer of a polyolefin or an olefin copolymer, said third adhesive layer being juxtaposed between, and firmly adhered to, the first and second layers;

(b) orienting said three layer film;

(c) and heat setting the film.

The film is entirely satisfactory for some uses in this form.

In making the preferred films according to this invention, the abuse resistant layer is added, by lamination methods, after metallizing either the third polyethylene terephthalate layer or the abuse resistant layer, and after optional reverse printing of the abuse resistant layer.

The invention comprehends a bag, or pouch, made by folding any of the foregoing films such that portions of the heat sealable layer are in face to face contact, and forming heat seals about the periphery of a portion thereof. The intended contents of the bag or pouch are, of course, introduced into the bag before the last portion of the seal is made closing the bag.

Embodiments of the invention are now explained in more detail by way of non-limitative example in the following description, to be read in conjunction with the accompanying drawings in which:

FIGURE 1 is a cross-section of a film forming the simplest embodiment of this invention;

FIGURE 2 is a cross-section of another, more protective film forming the preferred embodiment of this invention;

FIGURE 3 is a cross-section of an alternative more protective film according to this invention;

FIGURE 4 is an outline drawing illustrating representative processing equipment for carrying out the uniaxial orientation of films according to this invention; and

FIGURE 5 is a perspective view of a typical bag according to this invention.

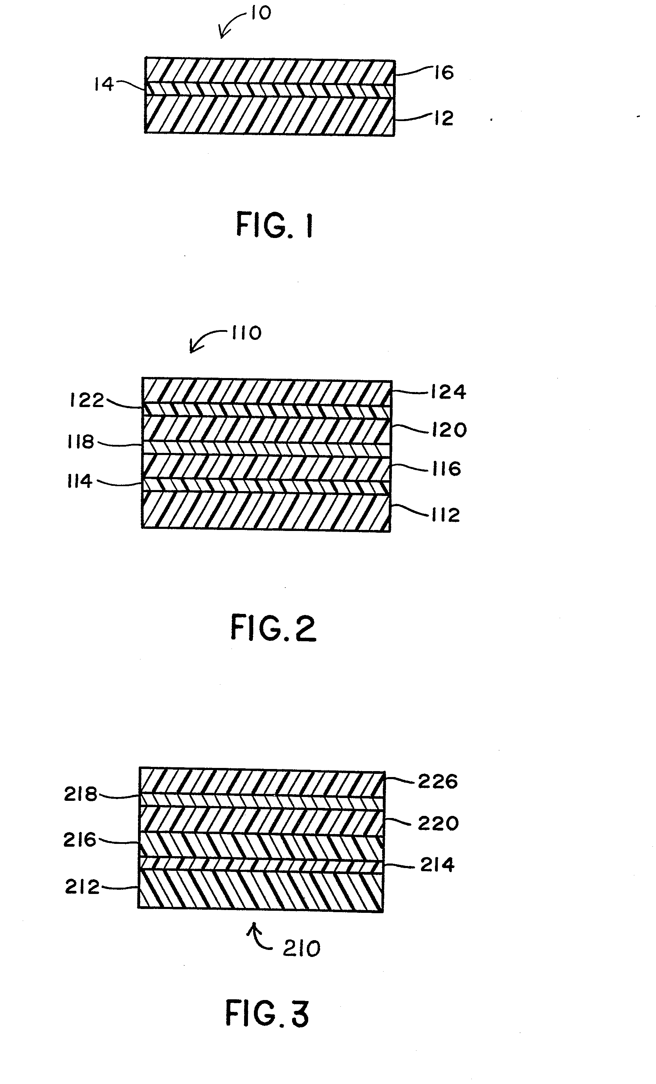

The simplest film according to the invention is shown in FIGURE 1 and is designated by the numeral 10. In the cross-section shown by FIGURE 1, layer 12 is a heat sealable layer, layer 14 is a polymeric adhesive layer, and layer 16 is polyethylene terephthalate. In the inventive film structure, all three layers are uniaxially oriented.

The film shown in FIGURE 2 is generally designated by the numeral 110 and represents the preferred embodiment of the film structure of the invention, as will be seen hereinafter. In FIGURE 2, the numbering pattern is the same as for the respective layers in FIGURE 1, except that 100-series numbers are used to distinguish the figure being discussed. For example, layer 112 in FIGURE 2 is the heat sealable layer in the FIGURE 2 structure, just as layer 12 is the heat sealable layer in FIGURE 1. Layer 114 is a polymeric adhesive layer. Layer 116 is a polyethylene terephthalate. All of layers 112, 114, and 116 are uniaxially oriented. Layer 118 is a thin layer of metallization, preferably of aluminium, as is commonly now used in the flexible film industry. Layer 120 is a polyethylene adhesive laminate layer. Layer 122 is ink, printed as desired for indicia and appearance sake on layer 124 which may be chosen for abuse-resisting properties. The ink usually does not cover the entire surface area of the film, and as such has various interuptions therein which allow for intimate contact between layer 120 and layer 124.

The structure shown in FIGURE 3 is similar to the structure of FIGURE 2 in many respects, although it is less preferred. Layers 212, 214 and 216 correspond respectively to layers 112, 114 and 116 of FIGURE 2, including all three layers being uniaxially oriented. Turning now to the differences between FIGURES 2 and 3 it is seen that the metallization layer 118 is applied to buried oriented PET layer 116 in FIGURE 2 while the metallization layer 218 is applied to the reverse side of outer oriented polyethylene terephthalate layer 226 in FIGURE 3. This rearrangement in FIGURE 3 provides for direct adhesive contact between layers 216 and 220. The reason the FIGURE 3 structure is less preferred is because, with the metallization 218 applied to layer 226, any graphics or other ink indicia are applied (not shown) on the exposed surface of layer 226. A further concern regarding the FIGURE 3 structure is that the outer abuse resistant layer 226 is oriented PET which is more costly than the OPP commonly used in layer 124 of FIGURE 2. The reason layer 226 is oriented PET is to provide a satisfactory surface for obtaining a uniform application of the barrier metallization layer 218. OPP does not provide such a satisfactory surface.

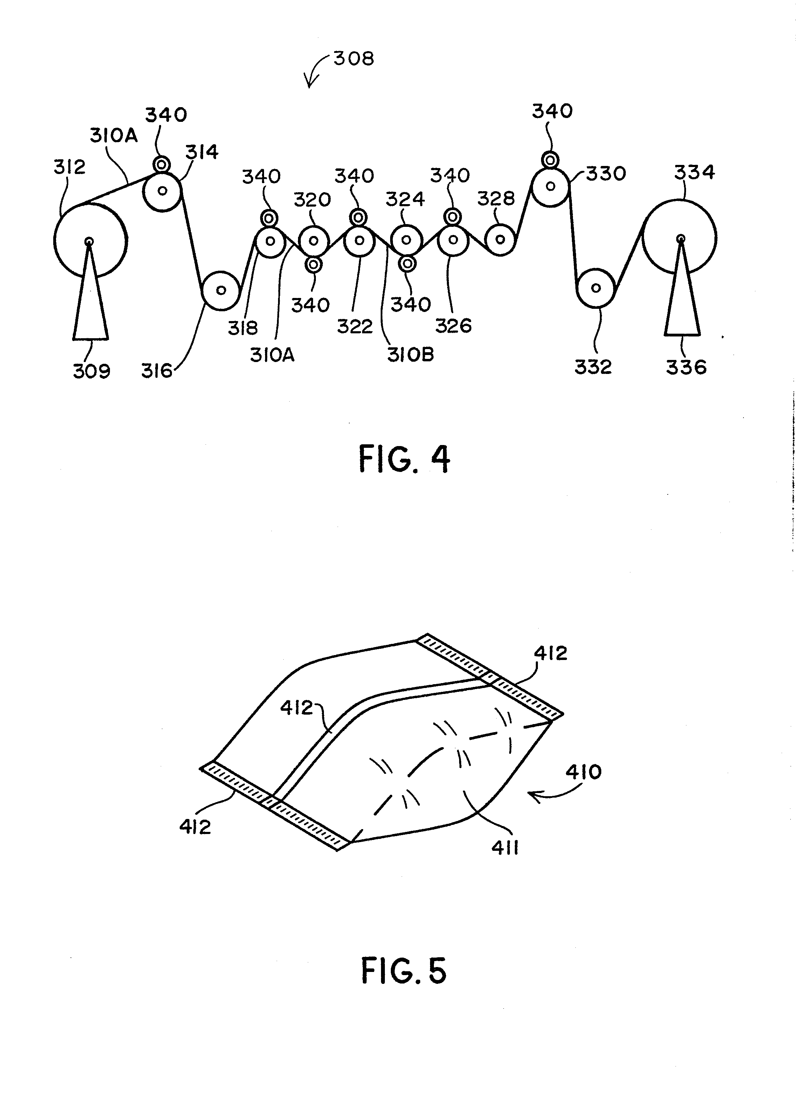

The crucial part of this invention which is common to all the embodiments is in the 3 layers 12, 14 and 16, and their counterparts in FIGURES 2 and 3, which, in each embodiment of the invention, are produced as a coextruded three layer film and are subsequently simultaneously uniaxially oriented. In a typical operation of producing the three layer film, the three polymers selected are extruded through three separate extruders in known manner. The melt streams are brought together in a three layer die and exit the die as a three layer melted film. The film is then cooled to solidify it. The preferred process is cast coextrusion. The film may then be wound up on a roll and stored for further processing at a convenient time. When convenient, the three layer film is then uniaxially oriented in the machine direction on an equipment line such as is outlined in FIGURE 4. Alternatively, the three layer film may be oriented in line with the extrusion operation, saving one material handling operation. After the three-layer film has been uniaxially oriented, it has a structure as seen in FIGURE 1 and may be used as is, in applications which do not require a good barrier to vapor transmissions through the film. As indicated hereinabove, the most preferred films of this invention are further structured particularly as in FIGURE 2. The concept of the oriented three layer structure accomplishes two important objectives. The first objective is to create an oriented PET surface which is an excellent surface for deposition thereon of a uniform layer of metallization which will act as an effective barrier to gaseous transmission through the film. The second objective is to provide, in an economical manner, a heat sealable layer having good heat seal characteristics, attached to the oriented PET, which heat sealable layer can be activated at a relatively low processing temperature to economise on the energy consumed by the packager.

Returning now to the structure of FIGURE 2, it is seen that oriented PET layer 116 is metallized for the primary purpose of obtaining gaseous barrier properties. The metallizing affords a secondary benefit of adding aesthetic appeal to the package appearance. A previously formed layer 124 of OPP may be printed with any desired graphics and is then laminated, preferably extrusion laminated, in known manner to the metallized (118) PET layer 116. OPP layer 124 provides physical protection for the metallization barrier layer 118. In the FIGURE 2 structure the OPP layer can, as illustrated, also serve as the carrier of any desired ink indicia or graphics; and does impede the rate of water vapor transmission.

In the FIGURE 3 structure, the positioning of the metallizing layer 218 puts two further constraints on the structure. The first constraint is that the abuse resistant layer 226 must be oriented PET, rather than OPP, in order to provide a satisfactory metallizing surface. The second constraint is that, in order to be visible on the package, any ink would have to be between the metallized layer 218 and the package exterior. Since techniques for metallizing over ink are difficult at best, ink preferably is not reverse printed on PET layer 226 and subsequently metallized. Therefore the most likely use of ink is as surface printing on the outside surface of layer 226.

Depending on the end use contemplated, the outer abuse resistant layer as in FIGURES 2 and 3 may be oriented polypropylene, oriented polyester, or oriented nylon.

While the compositions of the several layers are relatively fixed as described, the compositions of the sealant layer and the adjacent adhesive layer may vary somewhat. Selection of the composition of the adhesive layer depends primarily on the ability of the bonds at the layer interfaces, e.g. interfaces 12/14 and 14/16, to survive intact and with good bond strength the coextrusion and orienting processes. Functionally, the more critical selection is the composition of the adhesive layer, as at 14 in FIGURE 1, because of the difficulty of finding an adhesive polymer whose adhesion to PET will survive both the coextrusion and orientation processes. We have so far found three adhesive polymers which satisfy this requirement: CXA E-136 and CXA-3101, both by DuPont which are believed to be modified olefin copolymers, and LF-500, by Mitsui Company, which is a carboxy-modified polyethylene.

Given the adhesive which will adhere well to the PET layer, one is then able to select suitable polymers for the heat seal layer. Preferred polymer compositions are low density polyethylene, ethylene methyl acrylate, ethylene vinyl acetate and ionomer. The most preferred combination is CXA E-136 as the adhesive polymer and ionomer as the heat seal layer.

In understanding the process of uniaxially orienting the three layer film comprising layers 12, 14 and 16, it is significant to understand that the composition of sealant layer 12 responds to thermal stimuli at a substantially lower temperature than other layers of the film, and particularly layer 16. Significantly, we have found that by selectively applying heat to each film surface separately, and at a temperature selected to be compatible with the orientation of the composition of that layer and the interior layer, and by applying that heat to each surface for a moderate period of time, the three layer film herein may be successfully oriented without incurring splitting, pin-holing, or softening of any one layer.

The selection of the best orientation ratio for any given film is dependent upon the specific polymers chosen for each of the three layers, and the interlayer adhesion levels required by the intended end use of the film. For most packaging applications, interlayer adhesion levels should be at least 70 grams per inch width (27.6 g/cm) as measured by ASTM D903. For films contemplated by this invention, the preferred orientation ratio is usually 3/1, although some deviation is possible without serious interference with adhesion levels; and a range of 2.5/1 to 4/1 is acceptable.

In the illustrative process described herein, the heat applied to each of the surface layers, e.g. layers 12 and 16, is applied to the surface layers as they alternately contact alternative ones of the temperature-controlled rolls of the equipment line.

As an illustration, consider the processing through the equipment of FIGURE 4 of a typical previously coextruded three layer film as in FIGURE 1, wherein layer 12 is ionomer, layer 14 is CXA E-136 adhesive and layer 16 is PET. The film 310A is unwound from a roll 312 on unwind station 309 at a speed of 90 feet per minute (27.4 m/min) with the PET layer on the bottom surface of the film such that the PET contacts turning roll 314, which is kept at room temperature, or about 20°C. The film then progresses to the first pre-heat roll 316 which is temperature controlled at a temperature of 70°C., and where layer 12 is against roll 316 and receives initial pre-heating. At the next roll 318, which is temperature controlled at 91°C., the PET layer receives its initial direct-contact pre-heating. Layer 12 receives additional pre-heating at roll 320 which is temperature controlled at 70°C. The film is then stretched between rolls 320 and 322. This is accomplished by driving roll 322 faster than roll 320 and controlling the difference in drive speeds to effect the desired amount of stretch, referred to herein as the orientation ratio -- that being the fractional ratio of the driving speeds of the rolls 320 and 322. In this illustration, then, typical machine speeds during and after stretching are on the order of 270 feet per minute (82.3 m/min). It is anticipated that higher line speeds may be achievable.

After the film is stretched between rolls 320 and 322 it is designated 310B, as shown between rolls 322 and 324. Roll 324 is again temperature controlled; in this illustration at 70°C., the same as roll 320. Roll 322 is temperature controlled at 91°C., the same as roll 318. Rolls 326 and 328 are controlled at 80°C. The film is then annealed to provide a heat set to the film by contacting annealing roll 330, which roll is temperature controlled at 125°C. After annealing, the film is cooled by chill roll 332 to less than 40°C. and is subsequently wound up on a roll 334 at wind up station 336.

In terms of heating contact time, the film is in contact with pre-heat roll 316 for about 1.2-2.7 seconds, and rolls 318 and 320 for about 0.6-2.1 seconds each. Contact time on rolls 322, 324, 326 and 328 is about 0.4 to 0.6 second each. Contact time on rolls 330 and 332 is about 0.5 second. Also significant to the process is good control of the film speed and contact on all rolls at all stages of the operation. Thus nip rolls 340 are used at several locations along the processing line as seen in FIGURE 4.

Rolls 326 and 328 are optional in the processing line. When used, they are typically held at about 80°C.: the preferred functional nature of rolls 326 and 328 being such that they are held at the maximum temperature possible without having the sealant layer stick to them.

The process is adaptable to orienting the films of the invention whether the PET layer is on the top of the film or the bottom of the film. For example, the same film as above illustrated may be processed with the PET layer on the top of the film provided that roll temperatures are appropriately adjusted to compensate for the relative heat sensitivity of the surface layers. The corresponding roll temperatures are shown in the following Table 1 wherein the foregoing illustrated film is shown as Example 1. The same film oriented with the PET on top of the film is shown as Example 2. A third film of structure PET/CXA/LDPE, oriented with the PET on the bottom surface of the film is shown as Example 3. In designing a particular orienting operation, the rolls contacting the sealant layer are held at as high a temperature as is possible without the sealant layer sticking to either the temperature controlled roll or one of the nip rolls 340. Also, for example, heat transferred through the film during annealing may heat the rubber nip roll to a point where the sealant layer is softened and begins to stick to the rubber roll, if the annealing roll temperature is too high.

TABLE 1

| Roll No. | Roll Temp. °C. | | |
|---|---|---|---|
| | Ex. 1 | Ex. 2 | Ex. 3 |
| 314 | 20° | 20° | 20° |
| 316 | 70° | 70° | 70° |
| 318 | 91° | 78° | 89° |
| 320 | 70° | 98° | 84° |
| 322 | 91° | 78° | 89° |
| 324 | 70° | 98° | 84° |
| 326 | 80° | 86° | 82° |
| 328 | 80° | 86° | 82° |
| 330 | 125° | 80° | 112° |
| 332 | 40° | 40° | 40° |

Interlayer adhesion levels after orientation were measured for the films of Examples 1 and 3 and are shown as the average of five samples in Table 2.

Table 2

| Example Number | Interlayer Adhesion, grams/inch | |
|---|---|---|
| | PET/**CXA | CXA/Sealant |
| 1 | (CXA E-136) 125 | CNS* |
| 3 | (CXA 3101) 73 | CNS |

*CNS = cannot separate
**/ = layer interface

While the thickness of the three layer oriented film and its layers may be selected with substantial freedom, in a typical and economical film, the overall film is about 1 mil thick (0.025 mm); with layers 12 and 16 representing about 40% of the thickness each, and layer 14 representing about 20% of the thickness.

The film of Example 1 was further tested for notched tear properties in both the machine direction and the cross machine direction according to ASTM D-1922. In obtaining the cross-machine direction tear properties, no unusual observations were made, and the average tear strength was 128 grams. In obtaining the with-machine direction tear properties, it was observed that, after initially following the machine direction, the tear proceeded at a diagonal to the machine direction and the tear strength increased substantially. The average reported tear strength of this uniaxially machine direction oriented film, in the machine direction, was 480 grams, surprisingly more than three times the cross machine direction tear strength.

While the three layer films, such as in Examples 1, 2 and 3 are useable as they are, they are preferably made into high barrier films, such as shown in FIGURES 2 and 3, by known processes of metallization, printing and extrusion lamination, or by alternative processes known to the industry. Gaseous transmission rates of these barrier films are as anticipated for typical films having a metallized layer.

The films of this invention are conveniently made into a bag or pouch type package as shown generally at 410 of FIGURE 5 by folding a portion of the completed film 411 over onto itself and forming heat seals 412 along a longitudinal seam and two ends. Before the final end seal 412 is made the bag is filled with the desired amount of product.

The invention provides an economical packaging film having adjacent layers which have been simultaneously uniaxially oriented, and wherein one of the simultaneously uniaxially oriented layers is polyethylene terephthalate. By design, the film may have a sealant layer having a low-to-moderate heat sealing temperature. The preferred films are subsequently metallized and provided with an abuse resistant polymeric layer which protects the underlying internal layers from physical abuse. The finished film, which is readily converted into bags or pouches, has an aesthetically pleasing appearance thanks to the metallization which also provides an excellent barrier to gaseous transmission.

Claims:

1. A uniaxially oriented three layer film, comprising, in order, a first heat sealable layer (12), a second layer (14) of a modified polyolefin or olefin copolymer adhesive, and a third layer (16) of polyethylene terephthalate.

2. A film according to claim 1, which is produced by simultaneously coextruding the first, second and third layers, and subsequently simultaneously orienting all three layers.

3. A film according to claim 2, which is heat set after orientation.

4. A film according to claim 1, 2 or 3, wherein the heat sealable layer is chosen from low density polyethylene, ethylene methyl acrylate, ethylene vinyl acetate and ionomer.

5. A multiple layer film comprising, in order, a first uniaxially oriented heat sealable layer (112), a second uniaxially oriented layer (114) of a modified polyolefin or olefin copolymer adhesive, a third uniaxially oriented layer of polyethylene terephthalate (116), a fourth metallizing layer (118) on said polyethylene terephthalate layer (116), a fifth polyethylene adhesive layer (120), and a sixth abuse resistant layer (124).

6. A film according to claim 5, wherein the said first layer (112) is chosen from low density polyethylene, ethylene methyl acrylate, ethylene vinyl acetate and ionomer.

7. A film according to claim 5 or claim 6, wherein said sixth layer (124) is oriented polypropylene.

8. A film according to claim 7, wherein said oriented polypropylene is reverse printed with ink (122) so that said ink is disposed between fifth adhesive layer (120) and said sixth oriented polypropylene layer (124).

9. A multiple layer film comprising, in order a first uniaxially oriented heat sealable layer (212), a second uniaxially oriented layer of a modified polyolefin or olefin copolymer (214), a third uniaxially oriented layer of polyethylene terephthalate (216), a fourth polyethylene adhesive layer (220), a fifth layer of oriented polyester (226), and a sixth metallizing layer (218), the latter being disposed on a selected surface of a selected one of said third and fifth layers (216, 226), the selected surface of the selected layer being that which is adjacent said fourth adhesive layer (220).

10. A film according to claim 9, wherein the first layer (212) is ionomer and the second layer (214) is a modified olefin copolymer.

11. A method of making a plural layer film comprising the steps of:

(a) coextruding a three layer film having a first heat sealable layer, (12, 112, 212) a second polyethylene terephthalate layer (16, 116, 216) and a third adhesive layer (14, 114, 214) of a polyolefin or an olefin copolymer, said third adhesive layer being juxtaposed between, and firmly adhered to, the first and second layers;

(b) orienting said three layer film,

(c) and heat setting the film.

12. A method according to claim 11, including a subsequent step of laminating the exposed surface of said polyethylene terephthalate layer (116) to a fourth layer comprising oriented polypropylene (124).

13. A bag made from a multiple layer film which comprises the following layers, taken from the interior of the bag outwardly, namely a first uniaxially oriented heat sealable layer (12, 112, 212), a second uniaxially oriented layer (14, 114, 214) of a modified polyolefin or olefin copolymer adhesive, and a third uniaxially oriented layer (16, 116, 216) of polyethylene terephthalate.

14. A bag according to claim 22, wherein the said heat sealable layer is chosen from low density polyethylene, ethylene methyl acrylate, ethylene vinyl acetate and ionomer, and the said second layer is a modified polyethylene.

15. A bag according to claim 13 or claim 14, further including a fourth layer (118) of metallizing on said third layer (116) of oriented polyethylene terephthalate, a fifth adhesive layer (120) of polyethylene, and a sixth abuse resistant layer (124) chosen from oriented polyester and oriented polypropylene.

16. A bag according to claim 15 wherein the said sixth layer (124) is reverse printed with ink (122) so that said ink is disposed between said fifth adhesive layer (120) and the sixth layer.

10

14 — 16

12

FIG. 1

110

122 — 124

118 — 120

114 — 116

112

FIG.2

218 — 226

216 — 220

212 — 214

210

FIG.3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int Cl. ³) |
|---|---|---|---|
| Y | GB-A-2 099 754 (OJI YUKA GOSEISHI K.K.) * Abstract; claims 1,3,5; page 2, lines 28-64; page 3, lines 23-64; page 4, lines 1,2, 17-22, 29-59 * | 1-7,11 -15 | B 32 B 27/08 B 65 D 75/26 |
| A | | 8,16 | |
| | --- | | |
| Y | FR-A-2 450 853 (ASAHI KASEI KOGYO K.K.) * Claims 1,9,14,15; page 2, line 14 - page 3, line 35; page 5, line 20 - page 7, line 15; page 12, line 10 - page 13, line 32; page 14, line 29 - page 15, line 15; page 17, lines 21-27; page 18, line 32 - page 20, line 37; page 23, line 5 - page 24, line 2; page 46, lines 10-18 * | 1-4,11 ,13,14 | |
| | | | TECHNICAL FIELDS SEARCHED (Int. Cl. ³) |
| A | | 5-16 | B 32 B |
| | --- | | |
| A | DE-A-1 769 510 (ALKOR-WERK) * Figures 2,3; claims 1,3,5,6,10-12; page 2, lines 9-18; page 3, lines 4-14; page 4; page 5, lines 1-6 * | 1-6,9, 11 | |
| | --- -/- | | |

The present search report has been drawn up for all claims

| Place of search | Date of completion of the search | Examiner |
|---|---|---|
| THE HAGUE | 20-07-1984 | DE LA MORINERIE B.M. |

**European Patent Office**

**EUROPEAN SEARCH REPORT**

EP  84  30  2973

| | DOCUMENTS CONSIDERED TO BE RELEVANT | | Page  2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| Y | FR-A-2 429 720  (MITSUI PETROCHEM. IND., LTD.)  * Claim  1;  pages 1-2; page 11, lines  32-34;  page 11, line 36 - page  12, line 16; page 22, lines 24-29;  page 13, lines 18-19, 21, 23-25, 31-33 * | 5-7,9, 10,12, 15 | |
| A | EP-A-0 069 642  (RHONE-POULENC FILMS)  * En entier * | 5,9 | |
| A | US-A-4 188 443  (MUELLER et al.)  * En entier * | 1,2 | |

TECHNICAL FIELDS
SEARCHED (Int. Cl. ³)

The present search report has been drawn up for all claims

| Place of search | Date of completion of the search | Examiner |
|---|---|---|
| THE HAGUE | 20-07-1984 | DE LA MORINERIE B.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82